# EUROPEAN PATENT SPECIFICATION

(11) **EP 3 642 937 B1**
(45) Date of publication and mention of the grant of the patent: **13.09.2023**
(21) Application number: 18727187.9
(22) Date of filing: 14.05.2018
(51) Int. Cl.: H02K 1/14, H02K 15/02

(54) **SEGMENTED STATOR FOR A DIRECT DRIVE ELECTRICAL GENERATOR**
SEGMENTIERTER STATOR FÜR EINEN ELEKTRISCHEN DIREKTANTRIEBSGENERATOR
STATOR SEGMENTÉ DESTINÉ À UN GÉNÉRATEUR ÉLECTRIQUE À EXCITATION DIRECTE

(30) Priority: 18.07.2017 DE 102017212250
(43) Date of publication of application: 29.04.2020
(73) Proprietor: Siemens Gamesa Renewable Energy A/S, 7330 Brande (DK)
(72) Inventor: AZAR, Ziad, Sheffield S10 4ED (GB); THOMAS, Arwyn, Cheadle Hulme Cheshire SK8 6HW (GB)
(74) Representative: SGRE-Association
(86) International application number: PCT/EP2018/062296
(87) International publication number: WO 2019/015825

(56) References cited:
- EP-A2- 2 026 446
- GB-A- 2 505 472
- JP-A- 2011 087 374
- US-A1- 2005 269 891
- US-A1- 2006 279 160
- US-A1- 2012 153 768
- US-A1- 2013 038 169
- US-A1- 2013 047 419

## Description

### Field of invention

The present invention relates to a segmented stator for a direct drive electrical generator, e.g. a direct drive electrical generator for a wind power turbine.

### Art Background

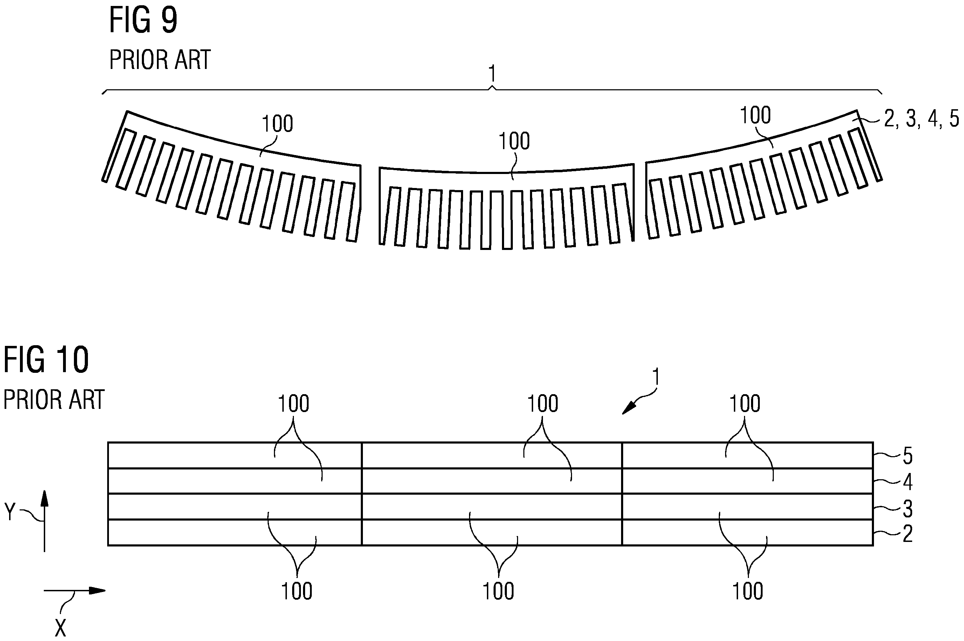

It is known to build direct drive electrical generators, in particular a large direct drive electrical generator to be used in a wind power turbine, including a stator made of grain oriented electrical steel lamination and having a segmented structure. The stator segments may be arranged to cover for example 30, 60, 90, 120 degrees (or any other angle) along the circumferential direction of the stator. Each arc segment is normally characterized by a lamination design including a plurality of layers stacked together along the axial direction of the stator. Each layer includes a plurality of slots, whose number depends from the functional specification of the direct drive electrical generators. For structural reasons the width of the layer has to increase together with the number of slots. However, due to the manufacturing constraints, which are typical when producing components made of grain oriented electrical steel; the width of the layers constituting the segments is limited to a maximum value. Therefore, also the maximum number of slots included in a layer appears to be limited. Such inconvenience is typically by forming each layer of the segment in a plurality of circumferential pieces, which are laid close to each other in the circumferential direction of the stator, as shown in Figure 9. Each layer piece may reach in particular the maximum allowable width and include the maximum allowable number of slots.

In figure 10, where a circumferential view of a prior-art embodiment of a stator segment 1 is shown, the horizontal direction X represents the circumferential direction of the stator developed on the plane of the figure, while the vertical direction Y represents the axial direction of the stator. The embodiment is formed of multi-lamination layers (laminated stator), for simplicity in figure 10 only four layers 2, 3, 4 and 5 are shown, each comprising three circumferential pieces 100, all having the same circumferential length, thus maximizing the electromagnetic performance of the stator. For the stator segment 1 mechanical weakness is however experimented.

Therefore, there is still a need to provide a stator segment for a direct drive electrical generator having an improved geometry, in order to maximize the mechanical strength, without significantly reducing the electromagnetic performance of the stator. EP 2 026 446 A2 and JP 2011 087374 A provide examples of laminated and segmented stators for electrical machines.

### Summary of the invention

This need may be met by the subject matter according to the independent claims. Advantageous embodiments of the present invention are described by the dependent claims.

According to the present invention, it is provided a stator segment according to claim 1.

The above described stator segment may be advantageously integrated in a wind turbine.

The stator segment geometry according to the present invention, through the axial overlapping between pieces of different adjacent layers, advantageously allows achieving mechanical robustness. At the same time a minimum or negligible loss of electromagnetic performances (torque and power) is experienced.

According to the different embodiments of the invention, specific geometries may be chosen, which may have:
- a first layer and a second layer, each including two to four circumferential pieces, in particular three circumferential pieces each,
- a first layer and a second layer, one of which including two circumferential pieces and the other including three circumferential pieces,
- a first layer and a second layer, one of which including three circumferential pieces and the other including four circumferential pieces.
- a layer including at least two circumferential pieces having the same circumferential lengths.

Advantageously, the manufacturing of a stator segment having layers including two to four circumferential pieces permits minimizing the manufacturing costs.

The different first and second layer designs may be alternatively stacked to for the whole axil length of the segment (stator).

According to the different embodiments of the invention, the circumferential length of any of the circumferential pieces is comprised between 10% to 70% of the total circumferential length of the stator segment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figures 1 to 8: show eight respective circumferential views of eight respective embodiments of a stator segment for a direct drive electrical generator in accordance with the present invention.
- Figure 9: shows a top view along an axial direction of a circumferential of a stator segment for a direct drive electrical generator in accordance with the prior art.
- Figure 10: shows a circumferential view of the stator segment of figure 9.

### Detailed Description

The illustrations in the drawings are schematic. It is noted that in different figures, similar or identical elements are provided with the same numerical reference signs. A respective letter appended to the numerical reference respectively identify each of the embodiments

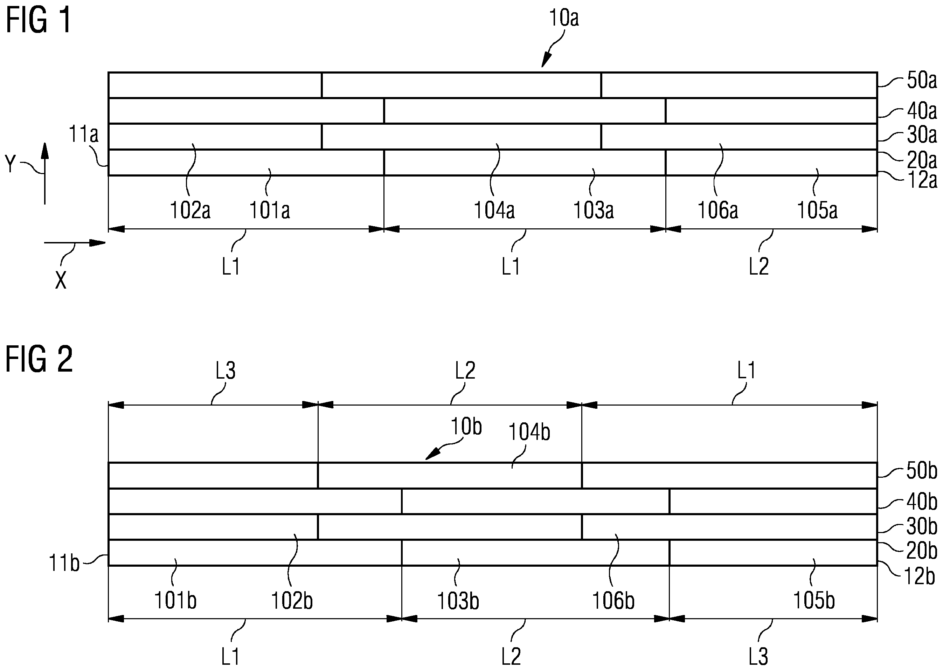

Figures 1 to 8 show respective embodiments 10a-h of a stator segment for a direct drive electrical generator in accordance with the present invention.

The stator segments 10a-h may be integrated in a direct drive electrical generator of a wind turbine (not represented). Each of the figures 1 to 8 represents a circumferential view of the respective stator segment 10a-h, where the horizontal direction represents the circumferential direction X of the stator developed on the plane of the figures, while the vertical direction represents the axial direction Y of the stator (not represented as a whole) including the stator segment 10a-h.

Each stator segment 10a-h extends along the circumferential direction X between a respective first circumferential end 11a-h to a respective second circumferential end 12a-h. Along the axial direction Y each stator segment 10a-h has a laminated structure including a stack with a plurality of layers. In all the embodiments of the attached figures 1 to 8, each stator segment 10a-h includes a series of a first layer 20ah, a second layer 30a-h, a third layer 40a-h and a fourth layer 50a-h, stacked over one another and repeated to form the whole segment length in the axial direction. According to different embodiments (not shown) of the present invention the stator segment may include a different number of layers. The third layer 40a-h is identical to the first layer 20a-h and the fourth layer 50a-h is identical to the second layer 30a-h.

In general, according to all the embodiments of the present invention, at least two layers of the stator segment are different from each other, as specified in the following. At least a first layer 20a-h and a second layer 30a-h include a respective plurality of circumferential pieces aligned along the circumferential direction X of the stator segment (10ah). Each of the circumferential pieces 101a-h, 102a-h, 103ah, 104a-h, 105a-h, 106a-h, 107a-h, 108a-h has a respective circumferential length. The circumferential pieces 101a-h, 102a-h, 103a-h, 104a-h, 105a-h, 106a-h, 107a-h, 108a-h are in general arranged in the layers and the layers are superimposed to each other in the stacked in such a way that that a first circumferential piece 101a-h of one layer is superimposed to at least a second circumferential piece 102a-h of an adjacent layer, the first circumferential piece 101a-h and the circumferential second piece 102a-h having respective different circumferential lengths L1, L2.

In general, according to the present invention, it is necessary that at least two circumferential lengths L1, L2 are provided for the circumferential pieces which constitutes the stator segment 10a-h and that at least a pair of axially adjacent circumferential pieces have different circumferential lengths. This is in contrast with the solution of the prior art where in all the pairs of axially adjacent circumferential pieces the circumferential length is the same for both circumferential pieces.

With reference to the stator segment 10a of figure 1, along the circumferential direction X between the first circumferential end 11a to the second circumferential end 12a, the first layer 20a and the third layer 40a include three circumferential pieces 101a, 103a, 105a and the second layer 30a and the fourth layer 50a include also three circumferential pieces 102a, 104a, 106a. The circumferential pieces 101a, 103a, 104a and 106a have the circumferential length L1, which is greater than the circumferential length L2 of the other circumferential pieces 102a, 105a.

With reference to the stator segment 10b of figure 2, along the circumferential direction X between the first circumferential end 11b to the second circumferential end 12b, the first layer 20b and the third layer 40b include three circumferential pieces 101b, 103b, 105b and the second layer 30b and the fourth layer 50b include also three circumferential pieces 102b, 104b, 106b. The circumferential pieces 101b, 103b, 105b of the first layer 20b and the third layer 40b have respective circumferential lengths L1, L2, L3 which are all different from each other and respectfully equal to the circumferential lengths of the circumferential pieces 106a, 104a, 102a of the second layer 30b and the fourth layer 50b.

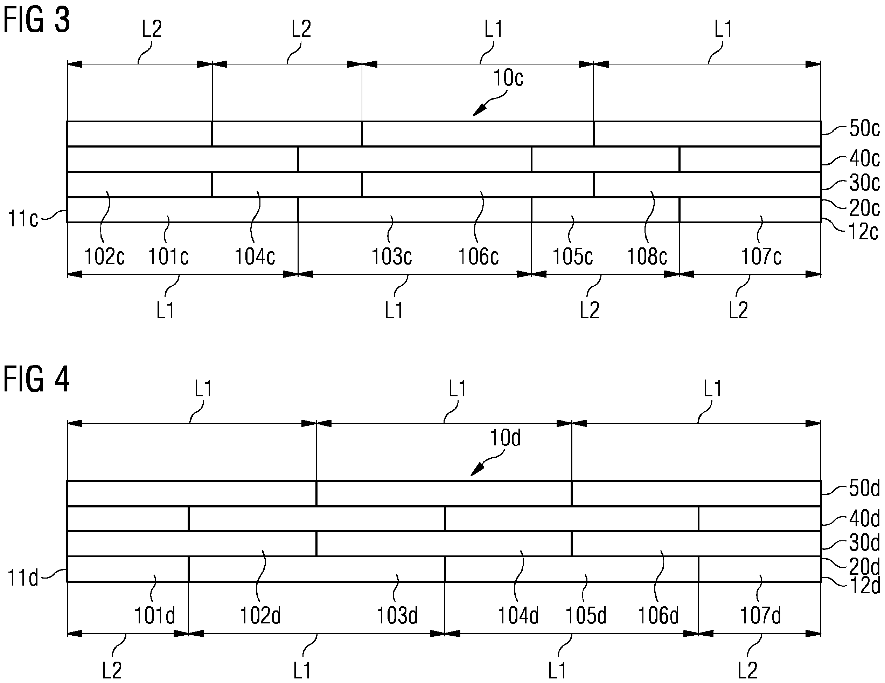

With reference to the stator segment 10c of figure 3, along the circumferential direction X between the first circumferential end 11c to the second circumferential end 12c, the first layer 20c and the third layer 40c include four circumferential pieces 101c, 103c, 105c, 107c and the second layer 30c and the fourth layer 50c include also four circumferential pieces 102c, 104c, 106c, 108c. The circumferential pieces 101c, 103c, 106c and 108c have the circumferential length L1, which is greater than the circumferential length L2 of the other circumferential pieces 105c, 107c, 102c and 104c.

With reference to the stator segment 10d of figure 4, along the circumferential direction X between the first circumferential end 11d to the second circumferential end 12d, the first layer 20d and the third layer 40d include four circumferential pieces 101d, 103d, 105d, 107d and the second layer 30d and the fourth layer 50d include three circumferential pieces 102d, 104d, 106d. The central circumferential pieces 103d and 105d of the first layer 20d and the third layer 40d have the circumferential length L1 of three circumferential pieces 102d, 104d, 106d of the second layer 30d and the fourth layer 50d. The circumferential length L1 is greater than the circumferential length L2 of the other circumferential pieces 101d and 107d of the first layer 20d and the third layer 40d.

In particular, according to a possible embodiment of the present invention L1 is the 33% of the total circumferential length of the stator segment 10d between the first circumferential end 11d to the second circumferential end 12d while L2 is the 16.7% of the total circumferential length of the stator segment 10d between the first circumferential end 11d to the second circumferential end 12d.

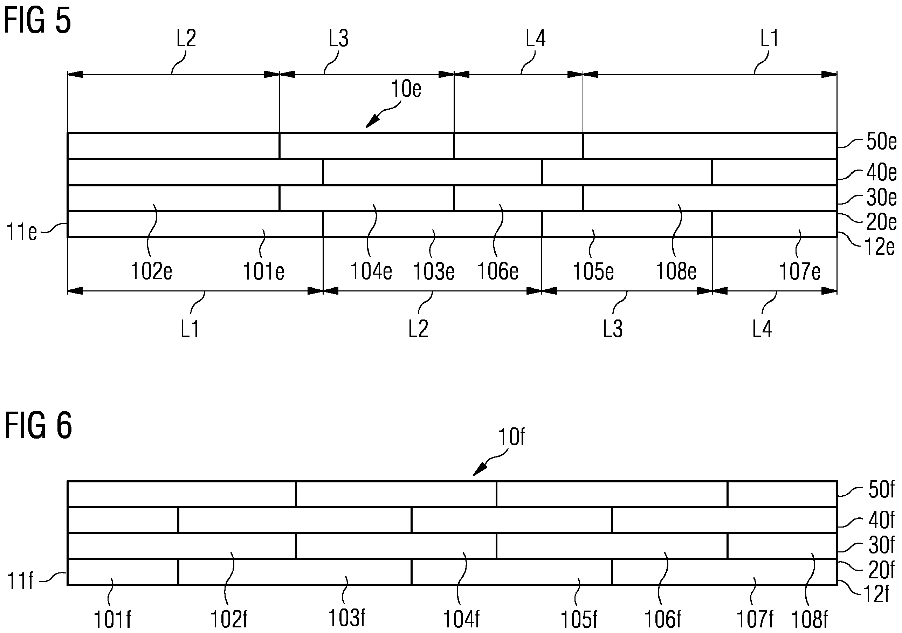

With reference to the stator segment 10e of figure 5, along the circumferential direction X between the first circumferential end 11e to the second circumferential end 12e, the first layer 20e and the third layer 40e include four circumferential pieces 101e, 103e, 105e, 107e and the second layer 30e and the fourth layer 50e include also four circumferential pieces 102e, 104e, 106e, 108e. The circumferential pieces 101e, 103e, 105e, 107e of the first layer 20e and the third layer 40e have respective circumferential lengths L1, L2, L3, L4 which are all different from each other and respectfully equal to the circumferential lengths of the circumferential pieces 108e, 102e, 104e, 106e of the second layer 30e and the fourth layer 50e.

The stator segment 10f of figure 6 is analogous to the stator segment 10e of figure 5, where L1 is the 14.8%, L2 and L4 are the 29.6% and L3 is the 25.9% of the total circumferential length of the stator segment 10f between the first circumferential end 11f to the second circumferential end 12f.

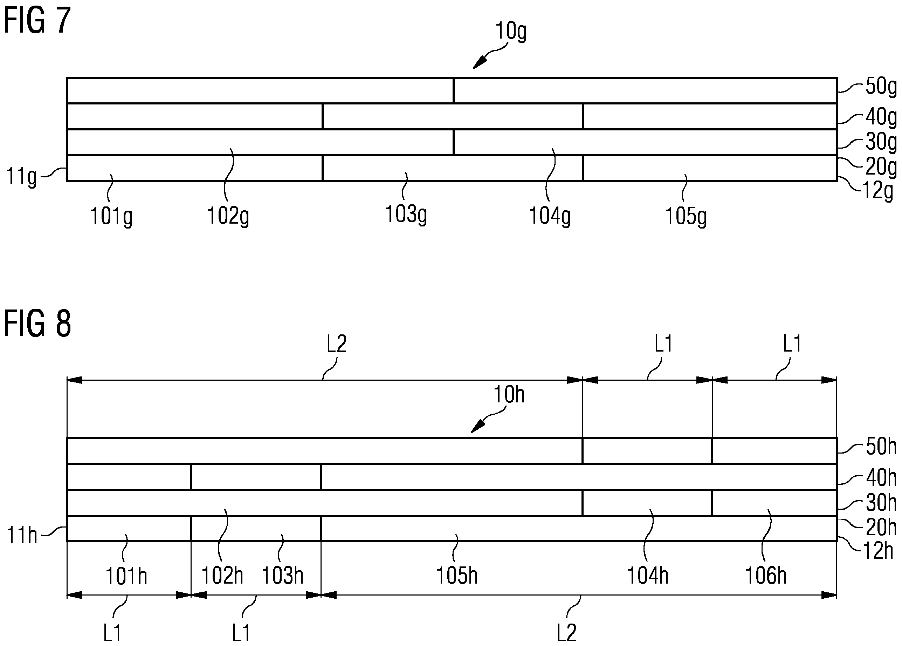

With reference to the stator segment 10g of figure 7, along the circumferential direction X between the first circumferential end 11g to the second circumferential end 12g, the first layer 20g and the third layer 40g include three identical circumferential pieces 101g, 103g, 105g and the second layer 30g and the fourth layer 50g include two identical circumferential pieces 102g, 104g.

The stator segment 10h of figure 8 is analogous to the stator segment 10a of figure a, with the difference the L1 is the 16.7% of the total circumferential length of the stator segment 10h between the first circumferential end 11h to the second circumferential end 12h and therefore lower than L2 which is the 66.7% of the total circumferential length of the stator segment 10h between the first circumferential end 11h to the second circumferential end 12h.

In the following Table 1 five possible designs are shown for a stator segment having a first layer including three circumferential pieces and a second including also three circumferential pieces. All the circumferential pieces have a first circumferential length L1 or a second circumferential length L2, as indicated:

| | | | Piece width (%) | | |
|---|---|---|---|---|---|
| N of pieces | Design No. | Layer No. | 1^{st} Piece | 2^{nd} Piece | 3^{rd} Piece |
| | 1 | 1 | 55.6 | 22.2 | 22.2 |
| | | 2 | 22.2 | 22.2 | 55.6 |
| | 2 | 1 | 44.4 | 27.8 | 27.8 |
| | | 2 | 27.8 | 27,8 | 44.4 |
| 3 | 3 | 1 | 38.9 | 30.6 | 30.6 |

| | | | | | |
|---|---|---|---|---|---|
| | | 2 | 30.6 | 30.6 | 38.9 |
| | 4 | 1 | 27.8 | 36.1 | 36.1 |
| | | 2 | 36.1 | 36.1 | 27.8 |
| | 5 | 1 | 22.2 | 38.9 | 38.9 |
| | | 2 | 38.9 | 38.9 | 22.2 |

In the following Table 2 two possible designs are shown for another stator segment having a first layer including four circumferential pieces and a second including three identical circumferential pieces. All the circumferential pieces in the first layer have a first circumferential length L1 or a second circumferential length L2, as indicated:

| | | | Piece width (%) | | | |
|---|---|---|---|---|---|---|
| N of pieces | Design No. | Layer No. | 1^{st} Piece | 2^{nd} Piece | 3^{rd} Piece | 4^{th} Piece |
| 3&4 | 1 | 1 | 22.2 | 27.8 | 27.8 | 22.2 |
| | | 2 | 33.3 | 33.3 | 33.3 | |
| | 2 | 1 | 16.7 | 33.3 | 33.3 | 16.7 |
| | | 2 | 33.3 | 33.3 | 33.3 | |

In the following Table 3 four possible designs are shown for a stator segment having a first layer including three circumferential pieces and a second including also three circumferential pieces. All the circumferential pieces have a first circumferential length L1 or a second circumferential length L2, as indicated:

| | | | Piece width (%) | | |
|---|---|---|---|---|---|
| N of pieces | Design No. | Layer No. | 1^{st} Piece | 2^{nd} Piece | 3^{rd} Piece |
| 3 | 1 | 1 | 50 | 25 | 25 |
| | | 2 | 25 | 25 | 50 |
| | 2 | 1 | 41.7 | 29.2 | 29.2 |
| | | 2 | 29.2 | 29.2 | 41.7 |
| | 3 | 1 | 58.3 | 20.8 | 20.8 |
| | | 2 | 20.8 | 20.8 | 58.3 |
| | 4 | 1 | 66.7 | 16.7 | 16.7 |
| | | 2 | 16.7 | 16.7 | 66.7 |

The stator segment of Table 3 is analogous to the stator segment of Table 1, but has a greater diameter with respect to the axial direction Y of than the stator to the stator segment of Table 1.

In the following Table 4 three possible designs are shown for another stator segment having a first layer including four circumferential pieces and a second including three identical circumferential pieces. All the circumferential pieces in the first layer have a first circumferential length L1 or a second circumferential length L2, as indicated:

| | | | Piece width (%) | | | |
|---|---|---|---|---|---|---|
| N of pieces | Design No. | Layer No. | 1^{st} Piece | 2^{nd} Piece | 3^{rd} Piece | 4^{th} Piece |
| 3&4 | 1 | 1 | 16.7 | 33.3 | 33.3 | 16.7 |
| | | 2 | 33.3 | 33.3 | 33.3 | |
| | 2 | 1 | 12.5 | 37.5 | 37.5 | 12.57 |
| | | 2 | 33.3 | 33.3 | 33.3 | |
| | 3 | 1 | 20.8 | 29.2 | 29.2 | 20.8 |
| | | 2 | 33.3 | 33.3 | 33.3 | |

The stator segment of Table 4 is analogous to the stator segment of Table 2, but has a greater diameter with respect to the axial direction Y of the stator than to the stator segment of Table 2.

## Claims

1. Stator segment (10a-h) for a direct drive electrical generator having a laminated structure including at least a first layer (20a-h) and a second layer (30a-h), each of the first layer (20a-h) and the second layer (30a-h) including a respective plurality of circumferential pieces (101a-h, 102ah, 103a-h, 104a-h, 105a-h, 106a-h, 107a-h, 108a-h) aligned along a circumferential direction (X) of the stator segment (10a-h) between a first circumferential end (11a-h) and a second circumferential end (12a-h),
wherein the first layer (20a-h) and the second layer (30a-h) are stacked along an axial longitudinal direction (Y) of the stator segment (10a-h) in such a way that a first circumferential piece (101a-h) of the first layer (20a-h) is superimposed to at least a second circumferential piece (102a-h) of the second layer (30a-h), the first circumferential piece (101a-h) and the circumferential second piece (102a-h) having respective different circumferential lengths (L1, L2).

2. Stator segment (10a-h) as claimed in claim 1, wherein each of the first layer (20a-h) and the second layer (20a-h) includes two to four circumferential pieces (101a-h, 102a-h, 103a-h, 104a-h, 105a-h, 106a-h, 107a-h, 108a-h).

3. Stator segment (10a-h) as claimed in claim 2, wherein each of the first layer (20a-h) and the second layer (30a-h) includes three circumferential pieces (101a-h, 102a-h, 103ah, 104a-h, 105a-h, 106a-h, 107a-h, 108a-h).

4. Stator segment (10a-h) as claimed in claim 2, wherein one of the first layer (20a-h) and the second layer (30a-h) includes two circumferential pieces and the other of the first layer and the second layer includes three circumferential pieces (101a-h, 102a-h, 103a-h, 104a-h, 105ah, 106a-h, 107a-h, 108a-h).

5. Stator segment (10a-h) as claimed in claim 2, wherein one of the first layer (20a-h) and the second layer (30a-h) includes three circumferential pieces and the other of the first layer and the second layer includes four circumferential pieces (101a-h, 102a-h, 103a-h, 104a-h, 105ah, 106a-h, 107a-h, 108a-h).

6. Stator segment (10a-h) as claimed in any of the previous claims, wherein the first layer (20a-h) or the second layer (30a-h) includes at least two circumferential pieces having the same circumferential lengths.

7. Stator segment (10a-h) as claimed in any of the previous claims, wherein the circumferential length of any of the circumferential pieces is comprised between 10% to 70% of the total circumferential length of the stator segment (10a-h).

8. Stator segment (10a-h) as claimed in any of the previous claims, wherein the first layer (20a-h) or the second layer (30a-h) are made of grain oriented electrical steel.

## Patentansprüche

1. Statorsegment (10a-h) für einen elektrischen Direktantriebsgenerator mit einer laminierten Struktur, umfassend mindestens eine erste Schicht (20a-h) und eine zweite Schicht (30a-h), wobei jede der ersten Schicht (20a-h) und der zweiten Schicht (30a-h) eine jeweilige Mehrzahl von peripheren Stücken (101a-h, 102a-h, 103a-h, 104a-h, 105a-h, 106a-h, 107a-h, 108a-h) umfasst, die entlang einer tangentialen Richtung (X) des Statorsegments (10a-h) zwischen einem ersten peripheren Ende (11a-h) und einem zweiten peripheren Ende (12a-h) ausgerichtet sind,
wobei die erste Schicht (20a-h) und die zweite Schicht (30a-h) entlang einer axialen Längsrichtung (Y) des Statorsegments (10a-h) auf eine derartige Weise gestapelt sind, dass ein erstes peripheres Stück (101a-h) der ersten Schicht (20a-h) mindestens ein zweites peripheres Stück (102a-h) der zweiten Schicht (30a-h) überlagert, wobei das erste periphere Stück (101a-h) und das zweite periphere Stück (102a-h) jeweils verschiedene periphere Längen (L1, L2) aufweisen.

2. Statorsegment (10a-h) nach Anspruch 1, wobei jede der ersten Schicht (20a-h) und der zweiten Schicht (20a-h) zwei bis vier periphere Stücke (101a-h, 102a-h, 103a-h, 104a-h, 105a-h, 106a-h, 107a-h, 108a-h) umfasst.

3. Statorsegment (10a-h) nach Anspruch 2, wobei jede der ersten Schicht (20a-h) und der zweiten Schicht (30a-h) drei periphere Stücke (101a-h, 102a-h, 103a-h, 104a-h, 105a-h, 106a-h, 107a-h, 108a-h) umfasst.

4. Statorsegment (10a-h) nach Anspruch 2, wobei eine der ersten Schicht (20a-h) und der zweiten Schicht (30a-h) zwei periphere Stücke umfasst und die andere der ersten Schicht und der zweiten Schicht drei periphere Stücke (101a-h, 102a-h, 103a-h, 104a-h, 105a-h, 106a-h, 107a-h, 108a-h) umfasst.

5. Statorsegment (10a-h) nach Anspruch 2, wobei eine der ersten Schicht (20a-h) und der zweiten Schicht (30a-h) drei periphere Stücke umfasst und die andere der ersten Schicht und der zweiten Schicht vier periphere Stücke (101a-h, 102a-h, 103a-h, 104a-h, 105a-h, 106a-h, 107a-h, 108a-h) umfasst.

6. Statorsegment (10a-h) nach einem der vorhergehenden Ansprüche, wobei die erste Schicht (20a-h) oder die zweite Schicht (30a-h) mindestens zwei periphere Stücke mit den gleichen peripheren Längen umfasst.

7. Statorsegment (10a-h) nach einem der vorhergehenden Ansprüche, wobei die periphere Länge aller peripheren Stücke zwischen 10 % und 70 % der peripheren Gesamtlänge des Statorsegments (10a-h) umfasst.

8. Statorsegment (10a-h) nach einem der vorhergehenden Ansprüche, wobei die erste Schicht (20a-h) oder die zweite Schicht (30a-h) aus kornorientiertem weichmagnetischem Stahl angefertigt ist.

## Revendications

1. Segment de stator (10a-h) destiné à un générateur électrique à excitation directe ayant une structure stratifiée comprenant au moins une première couche (20a-h) et une deuxième couche (30a-h), chacune de la première couche (20a-h) et de la deuxième couche (30a-h) comprenant une pluralité respective d'éléments circonférentiels (101a-h, 102a-h, 103a-h, 104a-h, 105a-h, 106a-h, 107a-h, 108a-h) alignés le long d'une direction circonférentielle (X) du segment de stator (10a-h) entre une première extrémité circonférentielle (11a-h) et une deuxième extrémité circonférentielle (12a-h),
la première couche (20a-h) et la deuxième couche (30a-h) étant empilées le long d'une direction longitudinale axiale (Y) du segment de stator (10a-h) d'une manière telle qu'un premier élément circonférentiel (101a-h) de la première couche (20a-h) est surimposé au niveau d'au moins un deuxième élément circonférentiel (102a-h) de la deuxième couche (30a-h), le premier élément circonférentiel (101a-h) et le deuxième élément circonférentiel (102a-h) ayant des longueurs circonférentielles différentes respectives (L1, L2).

2. Segment de stator (10a-h) tel que revendiqué selon la revendication 1, dans lequel chacune de la première couche (20ah) et de la deuxième couche (20a-h) comprend deux à quatre éléments circonférentiels (101a-h, 102a-h, 103a-h, 104a-h, 105ah, 106a-h, 107a-h, 108a-h).

3. Segment de stator (10a-h) tel que revendiqué selon la revendication 2, dans lequel chacune de la première couche (20ah) et de la deuxième couche (30a-h) comprend trois éléments circonférentiels (101a-h, 102a-h, 103a-h, 104a-h, 105a-h, 106ah, 107a-h, 108a-h).

4. Segment de stator (10a-h) tel que revendiqué selon la revendication 2, dans lequel l'une de la première couche (20ah) et de la deuxième couche (30a-h) comprend deux éléments circonférentiels et l'autre de la première couche et de la deuxième couche comprend trois éléments circonférentiels (101ah, 102a-h, 103a-h, 104a-h, 105a-h, 106a-h, 107a-h, 108a-h).

5. Segment de stator (10a-h) tel que revendiqué selon la revendication 2, dans lequel l'une de la première couche (20ah) et de la deuxième couche (30a-h) comprend trois éléments circonférentiels et l'autre de la première couche et de la deuxième couche comprend quatre éléments circonférentiels (101ah, 102a-h, 103a-h, 104a-h, 105a-h, 106a-h, 107a-h, 108a-h).

6. Segment de stator (10a-h) tel que revendiqué selon l'une quelconque des revendications précédentes, dans lequel la première couche (20a-h) ou la deuxième couche (30a-h) comprend au moins deux éléments circonférentiels ayant les mêmes longueurs circonférentielles.

7. Segment de stator (10a-h) tel que revendiqué selon l'une quelconque des revendications précédentes, dans lequel la longueur circonférentielle de l'un quelconque des éléments circonférentiels est comprise entre 10 % à 70 % de la longueur circonférentielle totale du segment de stator (10a-h).

8. Segment de stator (10a-h) tel que revendiqué selon l'une quelconque des revendications précédentes, dans lequel la première couche (20a-h) ou la deuxième couche (30a-h) est constituée d'acier magnétique à grains orientés.
